# EUROPEAN PATENT APPLICATION

(11) **EP 3 410 616 A1**
(43) Date of publication of application: **05.12.2018**
(21) Application number: 17305642.5
(22) Date of filing: 01.06.2017
(51) Int. Cl.: H04B 10/27, H04J 14/02, H04L 29/06, H04L 12/24

(54) **SYSTEM AND METHOD FOR EVALUATING THE RELIABILITY OF AN OPTICAL PATH IN AN OPTICAL NETWORK**

(71) Applicant: Nokia Solutions and Networks Oy, 02610 Espoo (FI)
(72) Inventor: BETGE-BREZETZ, Stéphane, 91620 Nozay (FR); VERCHERE, Dominique, 91620 Nozay (FR)
(74) Representative: Loyer & Abello

(57) **Abstract**

A system (1) for evaluating the reliability of an optical path (100) in an optical network (10), including:
a measurement-based vulnerability evaluation unit (2),
a component vulnerability evaluation unit (3),
a topology reliability evaluation unit (5) configured to compute, for some of the optical nodes (11) and optical links (12) within the optical network (10), an aggregated reliability score based on the measurement-based vulnerability score, component vulnerability score and local vulnerability score of said optical node (11) or optical link (12), and store it in a reliability aware topology database (51),
an optical path reliability evaluation unit (6) configured to retrieve, from the reliability aware topology database (51), the aggregated reliability score of some of the optical nodes (11) and optical links (12) the optical path (100) is passing through, and compute an optical path reliability score based on the retrieved aggregated reliability scores.

## Description

### Field of the invention

The invention relates to the technical field of security management in optical networks.

### Background

This section introduces aspects that may be helpful to facilitating a better understanding of embodiments herein. Accordingly, the statements of this section are to be read in this light and are not to be understood as admissions about what is in the prior art or what is not in the prior art.

Optical networks offer many advantages for high data rate communications. They however have special requirements in terms of network security management. Indeed, some optical components are particularly vulnerable to some faults or attacks (such as eavesdropping attacks) that can preclude the ideal functioning of the network.

The control plane of a server of the optical network must have the ability to select a reliable optical path for a requested end-to-end connection and configure the appropriate resources in the network. To that end, it should be able to assess the reliability of an optical path. Since security threats are rapidly evolving, the control plane should be able to adapt rapidly without any software update that would require interrupting the operation of the optical network.

The prior art and for example document "Security Assurance Profile for Secured Telecommunications Operations; Statement of needs for security assurance measurement in operational telecom infrastructures ETSI TR 187 023" describes some high-level notions of security metrics and service assurance view for telecom networks but does not consider the case of an optical network.

Therefore there is an unfulfilled need for a method and system able to efficiently evaluate the reliability of an optical path in an optical network.

### Summary

Various embodiments provide a system for evaluating the reliability of an optical path in an optical network, the optical path passing through a plurality of optical nodes and optical links, the system including:
a measurement-based vulnerability evaluation unit configured to compute, for some of the optical nodes and optical links, a measurement-based vulnerability score based on measurements acquired by sensors located within the optical network,
a component vulnerability evaluation unit configured to compute, for some of the optical nodes and optical links, a component vulnerability score based on statistical component vulnerability information retrieved from a component vulnerability database,
a local vulnerability database storing, for some of the optical nodes and optical links, a local vulnerability score based on the location of said optical node or link within the optical network, a topology reliability evaluation unit configured to compute, for some of the optical nodes and optical links, an aggregated reliability score based on the measurement-based vulnerability score, component vulnerability score and local vulnerability score of said optical node or optical link, and store it in a reliability aware topology database,
an optical path reliability evaluation unit configured to retrieve, from the reliability aware topology database, the aggregated reliability score of some of the optical nodes and optical links the optical path is passing through, and compute an optical path reliability score based on the retrieved aggregated reliability scores.

In some embodiments the aggregated reliability score of an optical node or link is computed as the inverse of an aggregated vulnerability score of said optical node or link, the aggregated vulnerability score being computed as a combination of at least the measurement-based vulnerability score, the component vulnerability score, and the local vulnerability score of said optical node or optical link.

In some embodiments the optical path reliability score is a linear combination of the aggregated reliability scores of some of the optical nodes and optical links the optical path is passing through.

In some embodiments, the optical path reliability score is an arithmetic mean of the aggregated reliability scores of some of the optical nodes and optical links the optical path is passing through.

In some embodiments, the optical path reliability score is a linear combination of the aggregated reliability scores of at least all of the optical nodes the optical path is passing through.

In some embodiments, the component vulnerability score of an optical node is computed based on statistical component vulnerability information of some or all of the components of the optical node.

Various embodiments provide a control plane for a router including a system for evaluating the reliability of an optical path, the control plane being configure to select an optical path from a source node to a destination node among a plurality of candidate optical paths taking into account the optical path reliability scores of the candidate optical paths.

Various embodiments provide a router comprising a control plane.

Various embodiments provide a method for evaluating the reliability of an optical path in an optical network, the optical path passing through a plurality of optical nodes and optical links, the method including:
computing, for some of the optical nodes and optical links, a measurement-based vulnerability score based on measurements acquired by sensors located within the optical network,
computing, for some of the optical nodes and optical links, a component vulnerability score based on statistical component vulnerability information retrieved from a component vulnerability database,
retrieve from a local vulnerability database, for some of the optical nodes and optical links, a local vulnerability score based on the location of said optical node or link within the optical network,
computing, for some of the optical nodes and optical links, an aggregated reliability score based on the measurement-based vulnerability score, component vulnerability score and local vulnerability score of said optical node or optical link, and store it in a reliability aware topology database,
retrieving, from the reliability aware topology database, the aggregated reliability score of some of the optical nodes and optical links the optical path is passing through, and computing an optical path reliability score based on the retrieved aggregated reliability scores.

Various embodiments provide a method for selecting an optical path from a source node to a destination node among a plurality of candidate optical paths taking into account the optical path reliability of the candidate optical paths, the reliability of the candidate optical paths being evaluated according to the method for evaluating the reliability of an optical path.

Various embodiments provide a method for monitoring the reliability of an optical path in an optical network, the reliability of the optical path being evaluated according to the method for evaluating the reliability of an optical path.

Various embodiments provide a computer program comprising executable code that causes a computer to perform all the steps of any methods describes above.

Some embodiments provide a method for assessing and monitoring the reliability of an optical path in an optical network in particular but not exclusively in a transparent optical network.

Assessing and monitoring the reliability of an optical path in an optical network is critical when the optical path is used to transport sensitive data (e.g., data having regulation and sovereignty constraints). In particular, monitoring the reliability of an optical path is important since the threats are constantly evolving.

Some embodiments may be used to select a reliable optical path for a requested end-to-end connection.

### Brief description of the drawings

These and other aspects of the invention will be apparent from and elucidated with reference to the embodiments described hereinafter, by way of example, with reference to the drawings.
Figure 1 illustrates an optical network comprising a system for evaluating the reliability of an optical path according to an embodiment of the invention,
Figure 2 is a functional representation of an optical node in an optical network.

### Detailed description of the embodiments

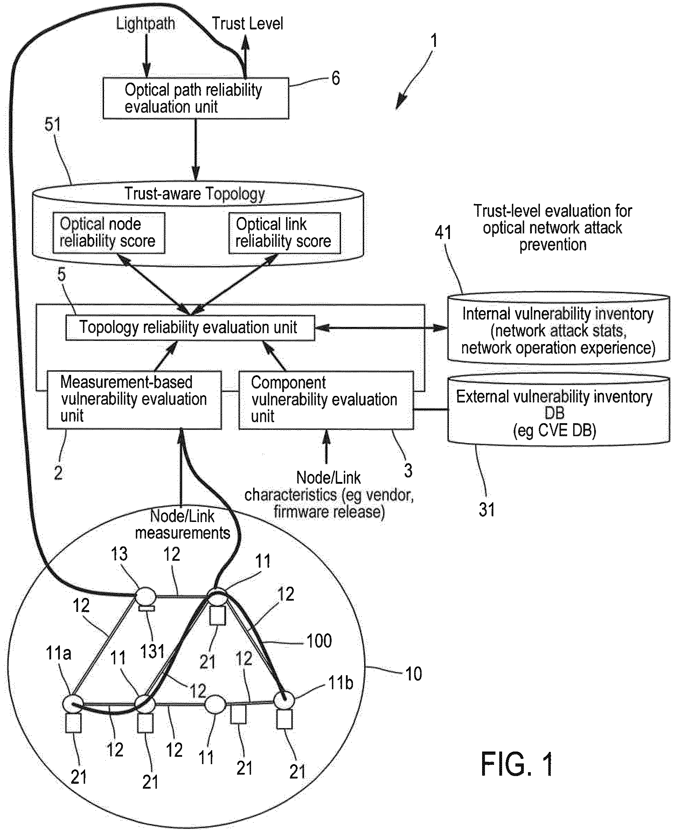

In reference to Figure 1, an optical network 10 comprises a plurality of optical nodes 11, 11a, 11b and optical links 12.

An optical path 100 is defined as an end-to-end optical connection between a source optical node 11a and a destination optical node 11b. An optical path 100 passes through a plurality of optical nodes 11 and optical links 12.

The quality of the communication through an optical node or link may be affected by a number of effects such as laser saturation, amplified spontaneous emission noise, optical crosstalk, fiber nonlinearities, reflections, and signal bandwidth narrowing caused by filter concatenation.

The optical network 10 includes sensors 21 configured to measure some parameters representative of the probability for an optical node 11 or an optical link 12 to be under attack.

The parameters measured may be the optical power, the bit error rate (BER) which is the number of bit errors per unit time, the bit error ratio (also BER) which is the number of bit errors divided by the total number of transferred bits during a studied time interval, or any other parameter representative of the probability for an optical node 11 or an optical link 12 to be under attack. As an example, a reduced optical power or bit error rate (BER) may be representative of a fiber bending attack. The measurements may be acquired at an optical link 12, like for example optical channel power monitoring along an optical fiber, or at an optical node 11, like for example at a reconfigurable optical add-drop multiplexer (ROADM) interface of a node 11. The information acquired from sensors 21 at optical nodes 11 may also be used to compute a parameters representative of the probability for an optical link 12 connecting a first and a second node to be under attack through an optical link 12 by comparing measurements acquired at the first node and measurements acquired at the second node.

A system 1 for evaluating the reliability of an optical path 100 in an optical network 10 includes a measurement-based vulnerability evaluation unit 2, a component vulnerability evaluation unit 3, a local vulnerability database 41, a topology reliability evaluation unit 5, and an optical path reliability evaluation unit 6.

The wording "reliability" (also called "trust level") should be understood as the degree to which an optical connection can be trusted confidently in the sense that it is guaranteed not to be vulnerable to any attacks or at least to any known attacks at least at the moment and preferably for a preset duration of time.

The wording "vulnerability" should be understood as the degree to which an optical connection is exposed to the possibility of being attacked.

The measurements of the sensors 21 are regularly sent to the system 1. The measurements of the sensors 21 may in particular be periodically sent to the system 1.

The measurement-based vulnerability evaluation unit 2 computes a measurement-based vulnerability score based on the measurements acquired by the sensors 21 for some and preferably all of the optical nodes 11 and links 12 within the network. In particular, the measurement-based vulnerability score of a node or link may be based on the parameters measured through the node or link or on the evaluation (derivate or higher-order derivatives) of those parameters.

The measurement-based vulnerability score of an optical node or link is regularly updated. In particular, it may be periodically updated (every second or minute for example). Alternatively, or additionally, the measurement-based vulnerability score may be updated each time the value of one of the measurements changes (e.g., more than a preset threshold).

A component vulnerability database 31 stores statistical component vulnerability information for some or all of the optical components 13 included in some or all of the optical nodes 11 and optical links 12 within the optical network. Statistical component vulnerability information may in particular be provided by manufacturers or by the Common Vulnerabilities and Exposures (CVE), accessible at https://cve.mitre.org, which provides a Common Vulnerability Scoring System (CVSS) with a score from 1 (less vulnerable) to 10 (most vulnerable) for optical components.

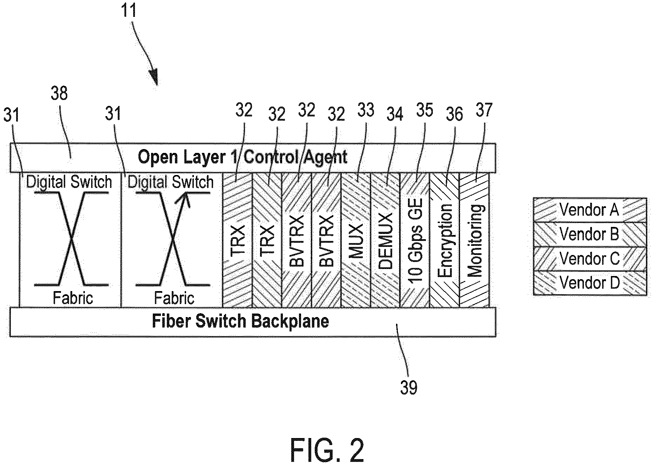

As illustrated by figure 2, an optical node 11, may comprise a plurality of subcomponents 31, 32, 33, 34, 35, 36, 37. The component vulnerability score of an optical node 11 is computed based on statistical component vulnerability information of some or all of its components 31, 32, 33, 34, 35, 36, 37. As an example, an optical node 11 may include one or more digital switches 31, one or more Tunable Laser Source transmitters 32, multiplexer(s) 33, demultiplexer(s) 34, Gigabit Ethernet Line Cards e.g.,10 Gbps GE 35, an encryption unit 36, a monitoring unit 37, a control agent 38, and a fiber switch backplane 39.

Additionally, some nodes 11 may embed a security element such as the one described in EP-A-2999172 certifying the firmware and the node configuration. Such nodes 11 may be associated to a lower component vulnerability score than other nodes 11.

There are many possible attacks in optical network depending on the optical systems that composed the optical network or/and on the architecture of the optical switch e.g. As an example, Broadcast & Select ROADM is more subject to crosstalk effects and consequently an eavesdropper can exploit the crosstalk effects to spy the data traffic carried by optical connections switched by B&S ROADM. Consequently, an optical connections switched by one or several B&S ROADMs is more vulnerable than an optical connections going through only Route & Select ROADMs.

The component vulnerability score of an optical node 11 or link 12 is regularly updated. In particular, it may be periodically updated (every month for example). Alternatively or additionally it may be updated each time a component vulnerability information of some of its components is updated in the component vulnerability database 31.

The topology reliability evaluation unit 5 is further configured to retrieve statistical local vulnerability information from a local vulnerability database 41. The statistical local vulnerability information includes a local vulnerability score for some or each of the optical nodes 11 or links 12 within the optical network.

The local vulnerability database 41 stores statistical local vulnerability information based on previous attacks detected in the network. The information may in particular be provided by the network infrastructure operators. Some segments of the network may be more vulnerable to attacks. As an example, some suburban areas may be statistically more attacked than others. For example, specific attacks may occur more frequently in some areas e.g., in areas where cables are easily accessible. Optical nodes and optical links located in such areas may get a higher local vulnerability score than other optical nodes and links. As a further example, some optical fibers or optical switches located in unrestricted locations accessible by anyone may be more prone to be attacked. Optical nodes associated to such optical switches and such optical links may be associated to a higher local vulnerability score than other nodes and links.

The topology reliability evaluation unit 5 computes an aggregated reliability score of an optical node 11 or optical link 12 based at least on the measurement-based vulnerability score, component vulnerability score, and local vulnerability score of said optical node 11 or optical link 12, and store it in a reliability aware topology database 51.

In particular, the aggregated reliability score of an optical node or link may be computed as the inverse of an aggregated vulnerability score (e.g., using the Common Vulnerability Scoring System (CVSS) scale from 1 to 10) of said optical node or link, the aggregated vulnerability score being computed as a combination of the measurement-based vulnerability score, component vulnerability score, and, optionally, the local vulnerability score of said optical node or link. The combination may in particular be a linear combination and for example the arithmetic mean.

The aggregated reliability score is regularly updated. In particular, it may be periodically updated (every second or minute for example). Alternatively or additionally, it may be updated each time one of the measurement-based vulnerability score, component vulnerability score, or local vulnerability score is updated.

In order to compute an optical path reliability score, the optical path reliability evaluation unit 6 retrieves, from the reliability aware topology database 51, an aggregated reliability score of some, and preferably all, of the optical nodes 11 and optical links 12 of the optical path 100 and computes an optical path reliability score based on the retrieved scores. In particular, the optical path reliability score may be a linear combination, and for example an arithmetic mean, of the aggregated reliability scores of the optical nodes 11 and optical links 12 of the optical path 100.

The optical path reliability score may for example be taken into account when computing an optical path between a source 11 a and a destination node 11b. A control plane 131 of a router 13 may communicate with the system 1 in order to retrieve the optical path reliability score of candidate optical paths from the source node 11a to the destination node 11b and select an optical path taking into account the optical path reliability score of each candidate optical paths. An example of an optical path computation method is described in European patent application 2015-307133 filed on 23 December 2015.

The optical path reliability score may also be exploited to assess and monitor the reliability/vulnerability of an optical path carrying data, and in particular sensitive data (e.g., data having regulation and sovereignty constraints). When the reliability of the optical path is below a preset threshold, a new optical path is computed.

Elements such as the measurement-based vulnerability evaluation unit 2, the component vulnerability evaluation unit 3, the topology reliability evaluation unit 5, and the optical path reliability evaluation unit 6, may be implemented in different manners. The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modifications and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. A system (1) for evaluating the reliability of an optical path (100) in an optical network (10), the optical path (100) passing through a plurality of optical nodes (11) and optical links (12), the system (1) including:
a measurement-based vulnerability evaluation unit (2) configured to compute, for some of the optical nodes (11) and optical links (12), a measurement-based vulnerability score based on measurements acquired by sensors (21) located within the optical network (10),
a component vulnerability evaluation unit (3) configured to compute, for some of the optical nodes (11) and optical links (12), a component vulnerability score based on statistical component vulnerability information retrieved from a component vulnerability database (31),
a local vulnerability database (41) storing, for some of the optical nodes (11) and optical links (12), a local vulnerability score based on the location of said optical node (11) or link (12) within the optical network (10),a topology reliability evaluation unit (5) configured to compute, for some of the optical nodes (11) and optical links (12), an aggregated reliability score based on the measurement-based vulnerability score, component vulnerability score and local vulnerability score of said optical node (11) or optical link (12), and store it in a reliability aware topology database (51),
an optical path reliability evaluation unit (6) configured to retrieve, from the reliability aware topology database (51), the aggregated reliability score of some of the optical nodes (11) and optical links (12) the optical path (100) is passing through, and compute an optical path reliability score based on the retrieved aggregated reliability scores.

2. The system (1) of claim 1, wherein the aggregated reliability score of an optical node (11) or link (12) is computed as the inverse of an aggregated vulnerability score of said optical node (11) or link (12), the aggregated vulnerability score being computed as a combination of at least the measurement-based vulnerability score, the component vulnerability score, and the local vulnerability score of said optical node (11) or optical link (12).

3. The system (1) of any of claims 1 to 2, wherein the optical path reliability score is a linear combination of the aggregated reliability scores of some of the optical nodes (11) and optical links (12) the optical path (100) is passing through.

4. The system (1) of claim 2, wherein the optical path reliability score is an arithmetic mean of the aggregated reliability scores of some of the optical nodes (11) and optical links (12) the optical path (100) is passing through.

5. The system (1) of claim 3 or 4, wherein the optical path reliability score is a linear combination of the aggregated reliability scores of at least all of the optical nodes (11) the optical path (100) is passing through.

6. The system (1) of any of claims 1 to 5, wherein the component vulnerability score of an optical node (11) is computed based on statistical component vulnerability information of some or all of the components (31, 32, 33, 34, 35, 36, 37) of the optical node (11).

7. Control plane for a router including a system (1) for evaluating the reliability of an optical path according to claims 1 to 6, the control plane being configure to select an optical path from a source node (11a) to a destination node (11b) among a plurality of candidate optical paths taking into account the optical path reliability scores of the candidate optical paths.

8. Router comprising a control plane according to claim 7.

9. Method for evaluating the reliability of an optical path (100) in an optical network (10), the optical path (100) passing through a plurality of optical nodes (11) and optical links (12), the method including:
computing, for some of the optical nodes (11) and optical links (12), a measurement-based vulnerability score based on measurements acquired by sensors (21) located within the optical network (10),
computing, for some of the optical nodes (11) and optical links (12), a component vulnerability score based on statistical component vulnerability information retrieved from a component vulnerability database (31),
retrieve from a local vulnerability database (41), for some of the optical nodes (11) and optical links (12), a local vulnerability score based on the location of said optical node (11) or link (12) within the optical network (10),
computing, for some of the optical nodes (11) and optical links (12), an aggregated reliability score based on the measurement-based vulnerability score, component vulnerability score and local vulnerability score of said optical node (11) or optical link (12), and store it in a reliability aware topology database (51),
retrieving, from the reliability aware topology database (51), the aggregated reliability score of some of the optical nodes (11) and optical links (12) the optical path (100) is passing through, and computing an optical path reliability score based on the retrieved aggregated reliability scores.

10. Method for selecting an optical path from a source node (11a) to a destination node (11b) among a plurality of candidate optical paths taking into account the optical path reliability of the candidate optical paths, the reliability of the candidate optical paths (100) being evaluated according to the method of claim 9.

11. Method for monitoring the reliability of an optical path (100) in an optical network (10), the reliability of the optical path (100) being evaluated according to the method of claim 9.

12. A computer program comprising executable code that causes a computer to perform all the steps of a method in accordance with any one claims 9 to 11 when executed.
